# EUROPEAN PATENT APPLICATION

(11) **EP 3 686 856 A1**
(43) Date of publication of application: **29.07.2020**
(21) Application number: 20153335.3
(22) Date of filing: 23.01.2020
(51) Int. Cl.: G08B 3/10, G08B 21/02, G08B 25/01, G08B 25/10, G08B 13/196

(54) **VOICE AND/OR IMAGE RECORDING AND TRANSMISSION SYSTEM**

(30) Priority: 23.01.2019 GB 201900909; 23.01.2019 GB 201900910
(71) Applicant: Howe, Anthony Richard, North Lincolnshire DN18 6BA (GB)
(72) Inventor: Howe, Anthony Richard, North Lincolnshire DN18 6BA (GB)
(74) Representative: Corbyn, David Jonathan

(57) **Abstract**

The present invention provides a voice and/or image recording system comprising audio and/or visual recording means, transmission means to transmit real-time audio and/or visual from the audio and/or visual recording means to a third party, and control means to control the audio and/or visual recording means and transmission means. The system may be provided located with a building or structure to be monitored, for example, a residential building or it may also be located with a mobile device, such as a mobile phone, tablet and/or the like, which may be located with or in close proximity to the owner or user.

## Description

The present invention relates to a voice and/or image recording and transmission system, and also to the prevention of crime which may take place or at least begin in a residential or office building where the victim may be located.

It is often desirable to record conversations or images to establish proof of what was heard or seen at a later date, e.g. at a court hearing or to police, or to inform others in real time of what is happening to an individual. This could relate to both civil and criminal actions.

It may also be desirable to use such systems to provide a layer of security with a building or property, in an attempt to prevent the occurrence of serious crimes which may occur as a result of a break-in to such properties.

In many cases, this initial crime may not cause actual death as the criminal will take away the person/people in a final attempt to kill the victim/s at another destination (property or land). This creates complications and difficulties for homicide detectives to locate a deceased body and to have sufficient proof of any crime/s that has taking place. At present in the USA, there are 120,000 cold cases not resolve recorded, but many other hundreds of thousands of cases are not reported as a crime to police authorities which go undetected. In many other cases, missing persons are reported to authorities by their family or friends yet these remain un-detected. Once a case becomes classified as cold, only 1% are ever solved in the USA.

Once, for example, a murder has taken place especially young children or young people, with their full lives and futures in front of them, it creates extreme major problems to hundreds of family members and friends, who have lives ruined over long-time grief and distress by this murder which can be a full lifetime whist they live. These innocent victims of crimes may receive no assistance or help following this crime, whereby the culprits committing crimes are entitled to receive legal advice which often denies truth being disclosed and a distortion of the truth. The legal system needs to be improved. In many cases young children or members of the public have difficulties at court revealing evidence due to possible repercussions and/or threats from the criminal/s or their associates.

It is unacceptable for a convict to commit crimes but yet be let out of jail early, to again repeat the act a second time then again released early to commit a further third murder. Punishment by judges can be unbalanced when it comes to sentencing. A case involving a murder in Belgium resulted in the two convicts being released back into society after only serving each four and five years. Other cases a murderer can be sentenced from 20 to 1000 years. This is unbalanced. It is not economical to impose long-term sentences to those which the public purse has to pay for this form of hotel accommodation in prisons. At a time the victim's families suffer with no part in the sentencing of crime.

The present invention is attempting to safeguard many crimes providing evidence that the police or other authorities are unable to consider. It is established that most crimes, e.g. rape and murder, are often caused by person/s known to a victim as fully disclosed in many TV programmes that disclose these facts and evidence, to include Homicide Detective, Forensic Detectives, Psychic Private Eyes, Murder on CCTV, Murder comes to Town, Nightmare Next Door, Crimes That Shook Britain, The First 48, Britain's Darkes Taboos and numerous others including Australia. The present invention attempts to restrict crimes and safeguarded victims by disclosures of evidence to assist detection, which vastly resist and prevents these crimes taking place. It is difficult to describe these type of criminals as normal members in our society and made difficult as the innocent public will not know of intended motives of these criminals which are based on greed, sexual exploits or theft.

The invention seeks to provide a system to address the above issues.

According to a first aspect of the present invention there is provided a voice and/or image recording system comprising:
audio and/or visual recording means;
transmission means to transmit real-time audio and/or visual from the audio and/or visual recording means to a third party, and
control means to control the audio and/or visual recording means and transmission means.

In one embodiment, said system may be provided located with a building or structure to be monitored, for example, a residential building. In another embodiment, said system may be located with a mobile device, such as a mobile phone, tablet and/or the like, which may be located with or in close proximity to the owner or user.

Typically, said audio recording means include one or more microphones. Typically, said visual recording means include one or more cameras. Preferably, said audio and/or visual recording means include connection means to connect the same to a recording device.

Preferably the audio and/or visual recording means are in a common housing attachable to a person or to an object. The microphone and/or camera may have a power source to power the connection means.

Preferably the transmission via said transmission means is a wireless connection, e.g. Bluetooth (RTM), Wi-Fi, cellular/mobile network and/or the like. In some embodiments, said transmission may be via a wired internet connection or wired phone line.

In one embodiment, the control means include sensor means. Typically, said sensor means are arranged to detect sound and/or movement within a predetermined distance of the system and subsequently activate said audio and/or visual recording means.

In one embodiment, said third party may include: emergency services personnel; police or other law enforcement databases. Typically, said transmission means may be arranged to transmit audio and/or visual recording to a police or law enforcement database, which may subsequently analyse the recording to assess whether or not individuals appearing on the recording match known persons on the said database.

In one embodiment, if the persons are known they are recorded by the audio and/or visual recording means, and/or a notification may be sent by the control means in real-time to any third party such as emergency services personnel. Typically, a notification may also be sent to the user/owner of the system, or other personnel authorised by the user.

Preferably the control means uses voice activation technology. In some embodiments, said system may be activated upon recognition of a spoken keyword or phrase by the audio recording means. This activation means may be provided alternatively or in addition to other activations means, such as if sounds and/or movements are detected within a predetermined range of the audio and/or visual recording means. The voice activation means may also react to one or more words uttered by the householder if they are present and in one embodiment the words may be key words which are uttered when the other person is a known threat.

In one embodiment lighting means may be used to allow the system to activate and function when in darkness. In one embodiment, the system includes power means, said power means provided in the form of one or more batteries. In another embodiment, the system may be connected to a mains supply of power.

In another embodiment, said system may further include audio output means. Typically, said audio output means are provided in the form of one or more speakers. Preferably, said speakers are provided to emit any or any combination of: alarms, sirens, pre-recorded voice warnings, animal Moises and/or the like. Additionally, said speakers may be arranged to emit real-time audio/dialogue from a user via a wired or wireless connection.

In one embodiment, said audio output means may be selectively activated by a user. Additionally or alternatively, said audio output means may automatically activate and initiate a voice warning, alarm or other such sound if it detects persons known to police or law enforcement authorities.

Typically, if persons known to a police or law enforcement database are recorded by the audio and/or visual recording means, a said audio output means may automatically activate and initiate a voice warning, alarm or other such sound to ward away said persons.

The transmission means and control means may be provided by a mobile phone driven by a specific application.

In another aspect of the present invention, there is provided a method of using a voice and/or image recording system, said method including the steps of:
providing a voice and/or image recording system having audio and/or visual recording means, transmission means to transmit real-time audio and/or visual from the audio and/or visual recording means to a third party, and control means to control the audio and/or visual recording means and transmission means;
said control means activating the audio and/or visual recording means and recording persons within a predetermined range of the same; and
said control means initiating the transmission means to transmit said recording to a third party.

In one embodiment, the control means include sensor means, which detect sound and/or movement within a predetermined distance of the system and subsequently activate said audio and/or visual recording means.

In one embodiment, said third party may include: emergency services personnels; police or other law enforcement databases and said transmission means transmit audio and/or visual recording to a police or law enforcement database, which subsequently analyse the recording to assess whether or not individuals appearing on the recording match known persons on the said database.

In one embodiment, if persons known to a police or law enforcement database are recorded by the audio and/or visual recording means, a notification is sent in real-time to emergency services personnel. Typically, a notification may also be sent to the user/owner of the system, or other personnel authorised by the user.

In another embodiment, the control means uses voice activation technology and said system may be activated upon recognition of a spoken keyword or phrase by the audio recording means.

In one embodiment, the voice and/or image recording system of the present invention may be incorporated into an access system for an opening, such as one described in the Applicant's co-pending European patent application EP19217728.5

According to another aspect of the invention there is provided an access system for an opening, said system including:
a locking portion associated with said opening, provided to move between locked and unlocked configurations;
authentication means provided to actuate said locking portion: and
recording means adapted to register and record access or attempted access by a person to the system.

Typically, said recording means includes audio and/or visual recording means, transmission means to transmit real-time audio and/or visual from the audio and/or visual recording means to a third party, and control means to control the audio and/or visual recording means and transmission means.

In one embodiment, said opening provided as a door or the like to a building. Typically, said building is a residential building.

In one embodiment, said system is provided to permit emergency access to an authorised person to the said building.

According to another aspect of the present invention there is provided a voice and/or image recording system comprising:
a) a microphone and/or camera
b) a recording device to record voice and images from the microphone and/or camera
c) connection means to connect the microphone and/or camera to the recording device, and
d) a transmission device to transmit real-time voice and/or images from the microphone and/or camera to a third party, and
e) control means to control the microphone and/or camera, recording device, and transmission device.

Preferably the connection means is a wireless connection, e.g. Bluetooth, between the microphone and/or camera and the recording device.

Preferably the transmission device uses a mobile phone network, or internet connection.

The connection means, transmission device, and control means may be provided by a mobile phone driven by a specific application.

According to another aspect, the present invention as described may be provided as a device covering an opening, such as a front door area of a building, including visual recording means that discloses visual evidence of all persons approaching the property, in use. Audio recording means may also be included.

An embodiment of the invention will now be described with reference to the accompanying drawings in which:
Figure 1 shows a schematic view of a first embodiment of the present invention, and
Figure 2 shows a schematic view of a second embodiment of the present invention.

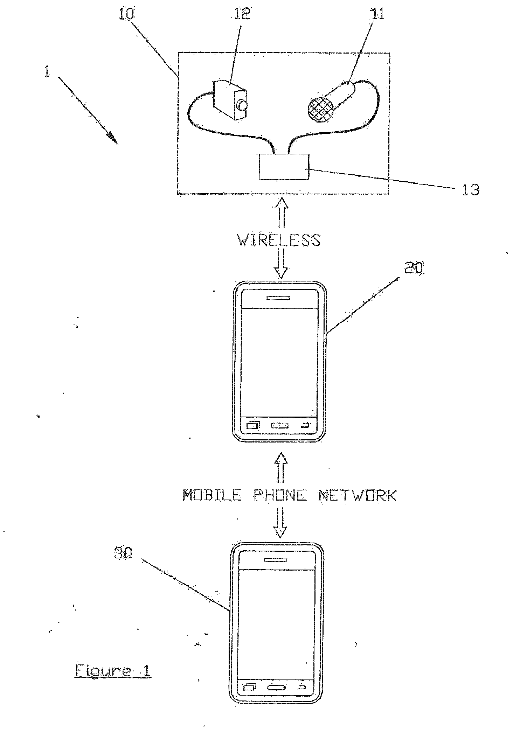

Referring to Figure 1 there is shown a voice and/or image recording system 1.

System 1 has a housing 10 having a microphone 11 and camera 12 connected to a circuit 13 to transmit audio and visual images wirelessly, e.g. using a Bluetooth (RTM) connection. Circuit 13 may typically have its own rechargeable power source.

Housing 10 may typically be disguised in an object which can be connected to a person such as adjacent that persons head, e.g. forming part of a head/hair band, broach, glasses, or hat. Housing 10 alternatively may be adapted to rest on an object adjacent a person, such as a car rear view mirror.

A recording device is provided which may be in the form of a user's mobile phone 20 programmed with a suitable Application to record voice and images from the microphone 11 and camera 12. Phone 20 would use its own Bluetooth (or other wireless) capability to communicate with circuit 13, thus forming a connection means.to connect the microphone and/or camera to the recording device.

Phone 20 also forms a transmission device to transmit real time voice and images from the microphone and/or camera to a third party, such as the phone 30 of a third party using the mobile phone network (or internet), or a police or law enforcement database for subsequent analysis or emergency service personnel.

Control means is provided to control the microphone and/or camera, recording device, and transmission device. This could be in the form of Voice recognition software such as Siri (RTM) commonly provided on mobile phones or other voice assistants and associated devices which may be located within a building.

In use, a person could record images and voice of for example a crime scene taking place (possible rape or theft) without a criminal knowing he or she was being recorded with the microphone or camera as they would be disguised in the housing 10. The person's phone could be out of sight in a pocket or handbag, the phone can be controlled by voice commands using the voice recognition capability. Such voice commands might include commands such as "don't come near me" which a criminal would not suspect were being used to commence recording of voice and visual images.

Images recorded by the phone 20 could also be streamed using the mobile phone network or internet to the phone 30 of a third party, such as a friend or family member, or police. Phone 20 could also provide its GPS position, so telling the third party the location of a crime to which help (such as police) could be sent.

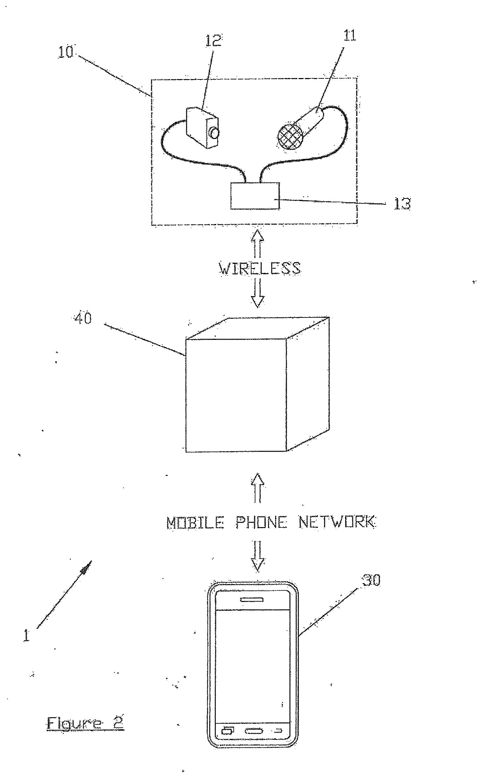

Referring now to Figure 2, there is shown a system identical to Figure 1, except the user's phone or other mobile device is replaced with a bespoke piece of hardware 40 which performs the same function as the phone 20.

The invention may take a form different to that specifically describe above. For example the microphone and camera would be connected to the phone 20 or hardware 40 be a lead rather than being wireless. Also the control means would be controlled through manual operation of the phone 20 or hardware 40, e.g. using manual or virtual switches. The microphone 11 could be a microphone in the mobile phone 20.

The invention may be used to make a record of many events in addition to crime scenes. This may include sexual harassment at work, normally for women, bulling of children, attitudes of staff and customers in shops, wholesale stores, police stations, hospitals and numerous other places where problems arise between people including work and employment related problems, racial difficulties even family squabbles where this facility will reveal the full accurate facts and truth that takes place.

According to another aspect, the present invention as described may be provided as a device covering an opening, such as a front and/or rear door area of a building, including visual recording means that discloses visual evidence of all persons approaching the property, in use. Audio recording means may also be included.

Such a system also include sensor means, which are arranged to detect sound and/or movement within a predetermined distance of the system and subsequently activate the audio and/or visual recording means. The third party associated with the system may in this example be emergency services personnel or a police or other law enforcement database. Upon detection and recording of a person by the system, that recording can be transmitted directly to a police or law enforcement database, which subsequently analyse the recording to assess whether or not individuals appearing on the recording match known persons on the said database. If persons known to a police or law enforcement database are recorded/recognized, a notification then be sent in real-time to emergency services personnel for them to act upon.

The device can be located in positions difficult for persons to see and/or reach, such as being situated on a wall close to the entrance.
a) This device will activate and function when a person or persons move within a predetermined range of the property with which the device is located.
b) Once the recording camera becomes operative it will allow a property owner to have the recording sent to nominated mobile phone/s, which will assist visual events if a person is not residing in the property.
c) With a person present at the home / office, the householder will have evidence of the visiting person(s) which will become more difficult for criminals with knowledge of these facts that become public knowledge and known to would-be criminals.
d) At present after any crime committed within the home / premises, authorities have to decide if entry was forced by damage to a door, entry or window. This task is difficult to establish where no forced entry can be established.
e) The intended device to record activities from the front door can be extended to other parts of the building or property, to include the back door, other entry points, to include windows or even other rooms within the building.
f) The recording device may be electrically operated or by a rechargeable battery to suit the property. Recorded material may be stored on a physical medium such as DVDs, cassettes and/or the like, which could be positioned by a householder in a suitable position in the property. An alphanumeric code may be included to safeguard other users or a safe if desired. Alternatively, recorded material may be stored digitally on an internal hard drive, a remotely located hard drive, and/or on a cloud server.

To ensure this product is economical time limits may be imposed on the recording of material, i.e., the camera may be idle whilst no activity is taking place. Thus, one or more motion and/or sound sensors may be included with the system to detect movement and/or sounds, which subsequently cause the system to be activated and begin recording, in use.

Further modifications will be apparent to those skilled in the art without departing form the scope of the present invention.

## Claims

1. A voice and/or image recording system comprising:
audio and/or visual recording means;
transmission means to transmit real-time audio and/or visual from the audio and/or visual recording means to a third party, and **characterized by**
control means to control the audio and/or visual recording means and transmission means.

2. A system according to claim 1, wherein said system is provided located with a building or structure to be monitored, for example, a residential building

3. A system according to claim 1, wherein said system is located with a mobile device, such as a mobile phone, tablet and/or the like, which is located with or in close proximity to the owner or user.

4. A system according to claim 1, wherein said audio recording means include one or more microphones and said visual recording means include one or more cameras.

5. A system according to claim 1, wherein the audio and/or visual recording means are in a common housing attachable to a person or to an object.

6. A system according to claim 1, wherein transmission via said transmission means is a wireless connection, e.g. Bluetooth (RTM), Wi-Fi, cellular and/or the like.

7. A system according to claim 1, wherein the control means include sensor means, arranged to detect sound and/or movement within a predetermined distance of the system and subsequently activate said audio and/or visual recording means.

8. A system according to claim 1, wherein said third party includes emergency services personnel and/or police or other law enforcement databases, and said transmission means are arranged to transmit audio and/or visual recording to a police or law enforcement database for analysis to assess whether or not individuals appearing on the recording match known persons on the said database.

9. A system according to claim 8, wherein if persons known to a police or law enforcement database are recorded by the audio and/or visual recording means, the control means are arranged to send a notification in real-time to emergency services personnel.

10. A system according to claim 1, wherein the control means uses voice activation technology and is arranged to be activated upon recognition of a spoken keyword or phrase by the audio recording means.

11. A system according to claim 1, wherein lighting means are provided to allow the system to activate and function when in darkness.

12. A system according to claim 1, wherein the transmission means and control means are provided by a mobile phone driven by a specific application.

13. A method of using a voice and/or image recording system, said method including the steps of:
providing a voice and/or image recording system having audio and/or visual recording means, transmission means to transmit real-time audio and/or visual from the audio and/or visual recording means to a third party, and control means to control the audio and/or visual recording means and transmission means;
said control means activating the audio and/or visual recording means and recording persons within a predetermined range of the same; and
said control means initiating the transmission means to transmit said recording to a third party.

14. A method according to claim 13, wherein said third party includes emergency services personnel, or police or other law enforcement databases and said transmission means transmit audio and/or visual recording to a police or law enforcement database, which subsequently analyses the recording to assess whether or not individuals appearing on the recording match known persons on the said database, and if persons known to a police or law enforcement database are recorded by the audio and/or visual recording means, a notification is sent in real-time to emergency services personnel.

15. A voice and/or image recording system comprising:
a microphone and/or camera
a recording device to record voice and images from the microphone and camera
connection means to connect the microphone and/or camera to the recording device, and
a transmission device to transmit real time voice and images from the microphone and/or camera to a third party, and
control means to control the microphone and/or camera, recording device, and transmission device.
